# EUROPÄISCHE PATENTANMELDUNG

(11) **EP 4 710 748 A1**
(43) Veröffentlichungstag der Anmeldung: **18.03.2026**
(21) Anmeldenummer: 25193631.6
(22) Anmeldetag: 04.08.2025
(51) Int. Cl.: A01D 41/127, A01F 12/46, G01N 1/20, G01N 21/85

(54) **SELBSTFAHRENDER MÄHDRESCHER**

(30) Priorität: 16.09.2024 DE 102024126614
(71) Anmelder: CLAAS Selbstfahrende Erntemaschinen GmbH, 33428 Harsewinkel (DE)
(72) Erfinder: Middelberg, René, 49080 Osnabrück (DE); von Nordheim, Maximilian, 33619 Bielefeld (DE); Burbank, Martin, 48231 Warendorf (DE); Florian, Janke, 48231 Warendorf (DE); Thomann, Fabian, 49074 Osnabrück (DE); Nowack, Dominik, 48301 Nottuln (DE)
(74) Vertreter: CLAAS Gruppe

(57) **Zusammenfassung**

Die vorliegende Erfindung betrifft einen selbstfahrenden Mähdrescher (1), welcher einen Kornelevator (12) zur Förderung eines Erntegutstroms (900) von einer Reinigungseinrichtung (10) des Mähdreschers (1) zu einem Korntank (13) des Mähdreschers (1) umfasst. Der Mähdrescher (1) umfasst eine am Kornelevator (12) angeordnete Bypass-Vorrichtung (14) zur Entnahme eines Erntegut-Teilstroms aus dem von dem Kornelevator (12) geförderten Erntegutstrom (900), wobei die Bypass-Vorrichtung (14) eine optische Messvorrichtung (19) zur Ermittlung von Ernteguteigenschaften, insbesondere von Inhaltsstoffen, des Erntegut-Teilstroms umfasst. Der Mähdrescher (1) ist dadurch gekennzeichnet, dass die Bypass-Vorrichtung (14) eine Aufnahmeeinrichtung (37) umfasst, welche mit der optischen Messvorrichtung (19) strömungstechnisch verbunden und dazu vorgesehen und eingerichtet ist, eine zuvor mittels der optischen Messvorrichtung (19) erfasste Menge an Erntegut des Erntegut-Teilstroms aufzunehmen.

## Beschreibung

Die vorliegende Anmeldung betrifft einen selbstfahrenden Mähdrescher zur Aufnahme und Behandlung von Erntegut gemäß dem Oberbegriff des unabhängigen Patentanspruchs 1.

Die Bestimmung von Inhaltsstoffen einer Erntegutprobe ist aus verschiedensten Gründen von Vorteil und für effiziente Bewirtschaftung Iandwirtschaftlicher Flächen erforderlich. So können beispielsweise anhand von bestimmten Inhaltsstoffen einer Erntegutprobe Schlüsse über eine Anbaustrategie auf einer landwirtschaftlichen Fläche gezogen werden und zukünftige Anbaustrategien optimiert werden. Auch ist es möglich anhand der Inhaltsstoffe einer Erntegutprobe den Betrieb einer landwirtschaftlichen Erntemaschine, insbesondere eines Mähdreschers, zu optimieren. Solche den Betrieb des Mähdreschers optimierende Prozesse laufen oftmals während des Erntevorgangs ab, um den Betrieb des Mähdreschers im Hinblick auf vorgebbare bzw. vorgegebene Zielsetzungen für den Erntevorgang sowie unter Berücksichtigung von während des Erntevorgangs vorliegenden Erntebedingungen optimal anzupassen. Hierfür ist es bekannt sogenannte Bypass-Vorrichtungen am Kornelevator des Mähdreschers vorzusehen, die eine Erntegutprobe aus einem Erntegutstrom entnehmen, der dem Korntank des Mähdreschers zugeführt wird. Die Inhaltsstoffe dieser Erntegutprobe können mit Hilfe einer solchen Bypass-Vorrichtung "on-board" ermittelt werden.

Eine solche Bypass-Vorrichtung ist beispielsweise aus der DE 10 2021 129 368 A1 bekannt, welche eine optische Messvorrichtung zur Ermittlung von Ernteguteigenschaften umfasst.

Die Ermittlung von Ernteguteigenschaften "on-board" mittels einer genannten Bypass-Vorrichtung ist demnach vorteilhaft, um den Mähdrescher im Betrieb auf die vorherrschenden Erntegutbedingungen hin optimiert anzupassen. Die der Analyse durch die Bypass-Vorrichtung zugeführte Erntegutprobe wird bei den bekannten Bypass-Vorrichtungen allerdings nach der Messung stets in den Erntegutstrom im Kornelevator zurückgeführt. Sofern eine nachträgliche Laboranalyse von Ernteguteigenschaften vorgenommen werden soll, was oftmals im Hinblick auf Zertifizierungen und einen Handel mit Erntegut wünschenswert ist, wird eine Erntegutprobe aus dem Korntank entnommen. Es besteht somit kein unmittelbarer Zusammenhang zwischen der "on-board"-analysierten Erntegutprobe und der nachträglich im Labor analysierten Erntegutprobe, sodass die jeweils gemessenen Ernteguteigenschaften der Erntegutproben durchaus regelmäßig erheblich voneinander abweichen können und somit die Erkenntnisse der beiden Analysen nur schwer ins Verhältnis zu setzen und zu nutzen sind.

Ausgehend von dem vorstehend genannten Stand der Technik ist es demnach die Aufgabe der vorliegenden Erfindung, die beschriebenen Nachteile des Standes der Technik auszuräumen und insbesondere eine Bypass-Vorrichtung anzugeben, mittels welcher einerseits Ernteguteigenschaften "on-board" zu ermitteln sind und andererseits eine bessere Vergleichbarkeit der "on-board"-Ernteguteigenschaftsermittlung und einer Ermittlung von Ernteguteigenschaften einer Erntegutprobe im Labor geschaffen wird.

Diese Aufgabe wird erfindungsgemäß durch die hier offenbarten Ausführungsformen gelöst, die insbesondere durch den Gegenstand des unabhängigen Patentanspruchs 1 definiert sind. Die abhängigen Ansprüche 2 bis 15 betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Demnach betrifft die vorliegende Erfindung einen selbstfahrenden Mähdrescher zur Aufnahme und Behandlung von Erntegut, wobei der Mähdrescher einen Kornelevator zur Förderung eines Erntegutstroms von einer Reinigungseinrichtung des Mähdreschers zu einem Korntank des Mähdreschers umfasst. Der Mähdrescher umfasst eine am Kornelevator angeordnete Bypass-Vorrichtung zur Entnahme eines Erntegut-Teilstroms aus dem von dem Kornelevator geförderten Erntegutstrom, wobei die Bypass-Vorrichtung eine optische Messvorrichtung zur Ermittlung von Ernteguteigenschaften, insbesondere von Inhaltsstoffen, des Erntegut-Teilstroms umfasst. Der Mähdrescher ist dadurch gekennzeichnet, dass die Bypass-Vorrichtung eine Aufnahmeeinrichtung umfasst, welche mit der optischen Messvorrichtung strömungstechnisch verbunden und dazu vorgesehen und eingerichtet ist, eine zuvor mittels der optischen Messvorrichtung erfasste Menge an Erntegut des Erntegut-Teilstroms aufzunehmen.

Durch die mit der optischen Messvorrichtung strömungstechnisch verbundene Aufnahmeeinrichtung wird es möglich, eine von der optischen Messvorrichtung hinsichtlich ihrer Ernteguteigenschaften analysierte Menge an Erntegut unmittelbar nach der Analyse zwecks einer anschließenden Laboruntersuchung bzw. -analyse aufzufangen. Im Gegensatz zum Stand der Technik muss somit keine Erntegutprobe aus dem Korntank entnommen werden. Vielmehr wird eine zuvor von der optischen Messvorrichtung erfasste Menge an Erntegut direkt nach Erfassung aus der Bypass-Vorrichtung entnommen, sodass dieselbe Menge an Erntegut einerseits "on-board" und andererseits im Labor untersucht werden kann. Hierdurch wird eine Vergleichbarkeit der "on-board"-Messung und der im Labor vorgenommenen Messung erzielt, was für etwaige Zertifizierungen und einen Handel mit Erntegut von Vorteil ist.

Gemäß einer vorteilhaften Weiterbildung der Erfindung ist vorgesehen, dass die Aufnahmeeinrichtung eine Verschlussvorrichtung und einen mit der Verschlussvorrichtung verbundenen Auffangbehälter umfasst.

Gemäß einer vorteilhaften Weiterbildung der Erfindung ist vorgesehen, dass die Verschlussvorrichtung ein Verschlusselement umfasst, welches zwischen einer Schließstellung, in welcher die optische Messvorrichtung und der Auffangbehälter strömungstechnisch voneinander getrennt sind, und einer Offenstellung, in welcher die optische Messvorrichtung und der Auffangbehälter strömungstechnisch miteinander verbunden sind, verlagerbar ist.

Gemäß einer vorteilhaften Weiterbildung der Erfindung ist vorgesehen, dass die Bypass-Vorrichtung eine Zuführungsöffnung umfasst, durch welche der Erntegut-Teilstrom aus dem Kornelevator in die Bypass-Vorrichtung einströmen kann, wobei die Bypass-Vorrichtung eine Rückführungsöffnung umfasst, durch welche der Erntegut-Teilstrom nach dem Passieren bzw. Durchströmen der optischen Messvorrichtung bzw. die mittels der optischen Messvorrichtung erfasste Menge an Erntegut des Erntegut-Teilstroms in den Kornelevator einströmen kann.

Gemäß einer vorteilhaften Weiterbildung der Erfindung ist vorgesehen, dass die Verschlussvorrichtung die Rückführungsöffnung umfasst, wobei das Verschlusselement derart in der Verschlussvorrichtung angeordnet ist, dass der Erntegut-Teilstrom bzw. die mittels der optischen Messvorrichtung erfasste Menge an Erntegut des Erntegut-Teilstroms in der Offenstellung des Verschlusselements ausschließlich in den Auffangbehälter und in der Schließstellung des Verschlusselements über Kontakt mit dem Verschlusselement ausschließlich durch die Rückführungsöffnung in den Kornelevator einströmt.

Die Ausgestaltung der Aufnahmeeinrichtung als Kombination aus Verschlussvorrichtung und Auffangbehälter, wobei die Verschlussvorrichtung mit der Rückführungsöffnung der Bypass-Vorrichtung strömungstechnisch gekoppelt ist und ein verlagerbares Verschlusselement umfasst, erlaubt auf besonders unkomplizierte Art und Weise wahlweise die zuvor mittels der optischen Messvorrichtung analysierte Menge an Erntegut aus dem Erntegut-Teilstrom zwecks einer Untersuchung im Labor zu entnehmen oder, sofern dies nicht gewünscht ist, diese in den Kornelevator rückzuführen. Die Entnahme der Menge an Erntegut durch den Auffangbehälter erfolgt dabei einfach und sicher.

Gemäß einer vorteilhaften Weiterbildung der Erfindung ist vorgesehen, dass die Verschlussvorrichtung eine Anlagestruktur umfasst, an welcher das Verschlusselement in der Schließstellung anliegt, wobei eine mit dem Erntegut-Teilstrom bzw. der mittels der optischen Messvorrichtung erfassten Menge an Erntegut des Erntegut-Teilstroms in Kontakt kommende Oberfläche des Verschlusselements derart konturiert ist, dass bei einem Verlagern des Verschlusselements aus der Offenstellung in die Schließstellung ein Einklemmen von Erntegut zwischen dem Verschlusselement und der Anlagestruktur vermieden wird.

Gemäß einer vorteilhaften Weiterbildung der Erfindung ist vorgesehen, dass die Oberfläche des Verschlusselements zumindest bereichsweise rampenförmig und gestuft ausgebildet ist.

Die Konturierung der mit dem Erntegut-Teilstrom in Kontakt gelangenden Oberfläche des Verschlusselements begünstigt, dass bei einem Verlagern des Verschlusselements aus der Offenstellung in die Schließstellung ein Einklemmen von Erntegut, insbesondere einzelnen Erntegutkörnern, zwischen dem Verschlusselement und der Anlagestruktur vermieden wird. Die Erntegutkörner können vielmehr während eines Schließvorgangs des Verschlusselements, je nachdem zu welchem Zeitpunkt während des Schließvorgangs die Erntegutkörner mit dem Verschlusselement in Kontakt gelangen, an der Rampe entlanggleiten und entweder durch die Rückführungsöffnung zurück in den Kornelevator oder über die Stufen noch ungehindert in den Auffangbehälter strömen.

Gemäß einer vorteilhaften Weiterbildung der Erfindung ist vorgesehen, dass das Verschlusselement ein Dichtelement zur dichtenden Anlage des Verschlusselements an der Anlagestruktur in der Schließstellung des Verschlusselements umfasst.

Gemäß einer vorteilhaften Weiterbildung der Erfindung ist vorgesehen, dass die Verschlussvorrichtung ein Vorspannelement umfasst, mittels welchem das Verschlusselement in die Schließstellung vorgespannt ist.

Gemäß einer vorteilhaften Weiterbildung der Erfindung ist vorgesehen, dass die Verschlussvorrichtung einen ansteuerbaren Aktor umfasst, welcher mit dem Verschlusselement zum Verlagern des Verschlusselements zwischen der Schließstellung und der Offenstellung gekoppelt ist.

Gemäß einer vorteilhaften Weiterbildung der Erfindung ist vorgesehen, dass der ansteuerbare Aktor ein elektrisch ansteuerbarer Hubmagnet ist.

Die Bereitstellung eines Dichtelements, eines Vorspannelements und/oder eines Aktors, vorzugsweise als Hubmagnet, sorgt einerseits für einen zur Schonung der Komponenten und zur Vermeidung eines Einklemmens von Erntegut sanften Schließ- und Öffnungsvorgang des Verschlusselements. Weiterhin wird sichergestellt, dass das Verschlusselement nur dann den Auffangbehälter freigibt, wenn eine Entnahme einer Menge an Erntegut des Erntegut-Teilstroms nach Analyse in der optischen Messvorrichtung auch wirklich gewünscht ist. Sollte der Aktor im Betrieb ausfallen bleibt das Verschlusselement durch die Vorspannung in der Schließstellung, sodass die Menge an Erntegut über die Rückführungsöffnung zurück in den Kornelevator strömt und der Auffangbehälter nicht unkontrolliert mit Erntegut befüllt wird.

Gemäß einer vorteilhaften Weiterbildung der Erfindung ist vorgesehen, dass eine Ansteuerung des Aktors zum Verlagern des Verschlusselements automatisiert oder manuell, vorzugsweise mittels Betätigung eines Bedienelements durch einen Bediener des Mähdreschers, erfolgt, wobei die Ansteuerung des Aktors vorzugsweise zeitabhängig oder durchsatzabhängig erfolgt.

Gemäß einer vorteilhaften Weiterbildung der Erfindung ist vorgesehen, dass das Verschlusselement als Verschlussklappe ausgebildet ist, wobei die Verschlussklappe um eine Rotationsachse schwenkbeweglich in der Verschlussvorrichtung gelagert ist.

Durch die Nutzung einer um eine in der Verschlussvorrichtung um eine Rotationsachse schwenkbeweglich gelagerte Verschlussklappe wird eine besonders bauraumeffiziente und funktionssichere Integration des Verschlusselements in die Verschlussvorrichtung erzielt.

Gemäß einer vorteilhaften Weiterbildung der Erfindung ist vorgesehen, dass der Auffangbehälter von der Bypass-Vorrichtung lösbar ist.

Gemäß einer vorteilhaften Weiterbildung der Erfindung ist vorgesehen, dass der Auffangbehälter zweiteilig ausgebildet ist, wobei die beiden Behälterteile mittels eines Sicherungsmittels lösbar miteinander verbunden sind.

Die zweiteilige Ausgestaltung des Auffangbehälters erlaubt eine unkomplizierte Entnahme der mit der optischen Messvorrichtung analysierten Menge an Erntegut zwecks einer Laboranalyse.

Die vorliegende Erfindung wird nachstehend anhand der in den Figuren abgebildeten Ausführungsformen näher beschrieben.

Es zeigen:
- FIG. 1: eine schematische und exemplarische Darstellung eines erfindungsgemäßen selbstfahrenden Mähdreschers;
- FIG. 2: eine schematische und exemplarische Darstellung einer erfindungsgemäßen Bypass-Vorrichtung des erfindungsgemäßen Mähdreschers gemäß FIG. 1;
- FIG. 3: eine schematische und exemplarische Schnittdarstellung der erfindungsgemäßen Bypass-Vorrichtung gemäß FIG. 2;
- FIG. 4: eine schematische und exemplarische Schnittdarstellung einer Verschlussvorrichtung einer erfindungsgemäßen Aufnahmeeinrichtung der erfindungsgemäßen Bypass-Vorrichtung gemäß FIG. 2; und
- FIG. 5: eine schematische und exemplarische Darstellung einer Förderschnecke eines Schneckenförderers der erfindungsgemäßen Bypass-Vorrichtung gemäß FIG. 2.

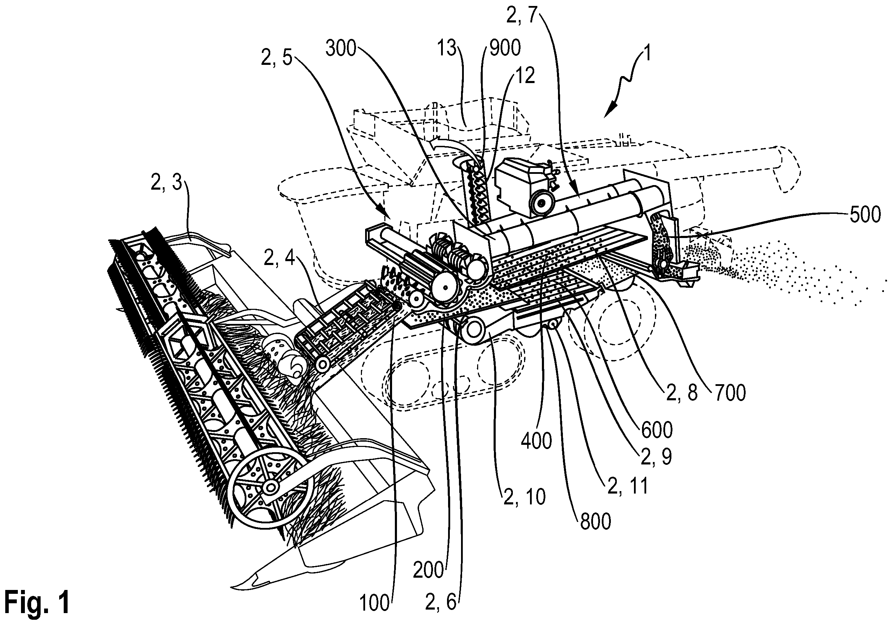

FIG. 1 zeigt eine schematische und exemplarische Darstellung eines erfindungsgemäßen selbstfahrenden Mähdreschers 1. Der Mähdrescher 1 weist eine Vielzahl von Arbeitsorganen 2 auf, die der Aufnahme und Behandlung von Erntegut dienen.

Das Erntegut wird mittels eines Vorsatzgerätes 3 des Mähdreschers 1 aufgenommen und in Form eines ersten Erntegutstroms 100 mittels eines Schrägförderers 4 des Mähdreschers 1 zu einem Dreschwerk 5 des Mähdreschers 1 gefördert. Das Dreschwerk 5, das eine Vielzahl von Dreschorganen aufweist, die von einem Dreschkorb umgeben sind, sorgt dafür, dass eine erste Abscheidung von Körnern aus dem ersten Erntegutstrom 100 in Form eines zweiten Erntegutstroms 200 erfolgt. Der zweite Erntegutstrom 200 wird auf einen Vorbereitungsboden 6 abgeschieden.

Nach Durchlaufen des Dreschwerks 5 wird ein aus diesem austretender dritter Erntegutstrom 300 einer Abscheideeinrichtung 7 zugeführt. Die im dritten Erntegutstrom 300 noch enthaltenen, freibeweglichen Körner werden mittels der Abscheideeinrichtung 7 in Form eines vierten Erntegutstroms 400 auf einen Rücklaufboden 8 abgeschieden und anschließend dem Vorbereitungsboden 6 zugeführt. Ein verbleibender fünfter Erntegutstrom 500, der hauptsächlich aus Nichtkornbestandteilen, wie Spreu, Halmteilen, etc., besteht, wird aus dem Mähdrescher 1 herausgefördert, wobei dieser vorher eine Zerkleinerungseinrichtung durchläuft.

Der zweite Erntegutstrom 200 und der vierte Erntegutstrom 400 werden über den Vorbereitungsboden 6 und den Rücklaufboden 8 zu einem sechsten Erntegutstrom 600 zusammengeführt, der einer aus mehreren Siebenebenen bestehenden Siebeinrichtung 9 sowie einer ein Gebläse umfassenden Reinigungseinrichtung 10 zugeführt wird. Der sechste Erntegutstrom 600 wird in diesen Einrichtungen 9, 10 gereinigt, indem noch im Erntegutstrom 600 enthaltenen Nichtkornbestandteile aus dem Erntegutstrom 600 entfernt werden. Diese entfernten Nichtkornbestandteile werden in Form eines siebten Erntegutstroms 700 aus dem Mähdrescher 1 herausgefördert.

Der Mähdrescher 1 weist ferner eine Überkehrschnecke 11 auf, die dazu eingerichtet ist, einen mittels der Siebeinrichtung 9 und der Reinigungseinrichtung 10 erzeugten achten Erntegutstrom 800, der noch nicht ausgedroschene Körner enthalten kann, erneut dem Dreschwerk 5 zuzuführen.

Ein ebenfalls mittels der Siebeinrichtung 9 und der Reinigungseinrichtung 10 erzeugter neunter Erntegutstrom 900, auch als gereinigter Körnerstrom bezeichnet, wird mittels eines Kornelevators 12 in einen Korntank 13 des Mähdreschers 1 gefördert. Die in FIG. 1 abgebildeten und zuvor beschriebenen Erntegutströme 100 bis 900 sind nicht abschließend zu verstehen und hängen von der technischen Ausgestaltung des Mähdreschers 1 ab.

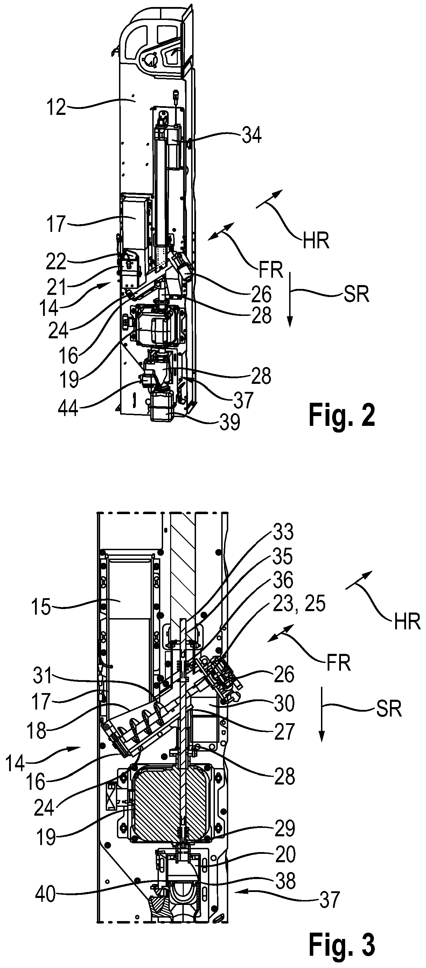

Der Kornelevator 12 umfasst eine, schematisch in FIG. 2 dargestellte, Bypass-Vorrichtung 14, die an dem Kornelevator 12 angeordnet ist und die Entnahme eines Erntegut-Teilstroms aus dem von dem Kornelevator 12 in den Korntank 13 geförderten Erntegutstrom 900 ermöglicht. Der Erntegut-Teilstrom strömt vom Kornelevator 12 in die Bypass-Vorrichtung 14 ein und durchströmt diese, wobei der Erntegut-Teilstrom nach dem Durchströmen der Bypass-Vorrichtung 14 zumindest überwiegend wieder zurück in den Kornelevator 12 strömt.

Die Bypass-Vorrichtung 14 weist eine Zuführungsöffnung 15 auf, durch welche der Erntegut-Teilstrom ausgehend von dem Kornelevator 12 in die Bypass-Vorrichtung 14 einströmt. Die Bypass-Vorrichtung 14 umfasst einen Schneckenförderer 16 zur Förderung des Erntegut-Teilstroms in der Bypass-Vorrichtung 14 und einen Sammelbehälter 17 zum Sammeln des Erntegut-Teilstroms, wobei der Sammelbehälter 17 im Bereich der Zuführungsöffnung 15 angeordnet bzw. ausgebildet ist. Der Sammelbehälter ist vorzugsweise wie in FIG. 2 und 3 dargestellt, zwischen der Zuführungsöffnung 15 und dem Schneckenförderer 16 derart ausgebildet und/oder angeordnet, dass der Erntegut-Teilstrom ausgehend von der Zuführungsöffnung 15 zunächst in den Sammelbehälter 17 strömt und anschließend von dem Sammelbehälter 17 aus über eine Einströmöffnung 18 des Schneckenförderers 16 in den Schneckenförderer 16 einströmt. Die Zuführungsöffnung 15 ist oberhalb eines Teiles des Schneckenförderers 16 angeordnet, wodurch der Erntegut-Teilstrom gravitationsbedingt zunächst in den Sammelbehälter 17 und anschließend in den Schneckenförderer 16 im Wesentlichen entlang der Schwerkraftrichtung SR strömt.

Die Bypass-Vorrichtung 14 umfasst eine optische Messvorrichtung 19, die dazu vorgesehen und eingerichtet ist, Ernteguteigenschaften des dem Kornelevator 12 entnommenen Erntegut-Teilstroms bzw. einer Menge an Erntegut des dem Kornelevator 12 entnommenen Erntegut-Teilstroms zu ermitteln. Insbesondere ist die optische Messvorrichtung 19 dazu eingerichtet, die Inhaltsstoffe des entnommenen Erntegut-Teilstroms bzw. einer Menge an Erntegut des entnommenen Erntegut-Teilstroms zu ermitteln. Mit der optischen Messvorrichtung 19 können so beispielweise die Wassermasse, die Proteinmasse, die Kohlenhydratmasse, die Fettmasse und/oder die Ölmasse des dem Erntegutstrom 900 mittels der Bypass-Vorrichtung 14 entnommenen Erntegut-Teilstroms ermittelt werden. Hierfür weist die optische Messvorrichtung 19 eine - in den FIGs. nicht dargestellte - Lichtquelle auf, die den Erntegut-Teilstrom bzw. eine Menge an Erntegut des Erntegut-Teilstroms beim Durchströmen der optischen Messvorrichtung 19 belichtet. Die optische Messvorrichtung 19 erfasst mit einem - in den FIGs. nicht dargestellten - Sensor massen proportionale Absorptionsspektren und ermittelt anhand dieser Messdaten die Wassermasse, die Proteinmasse, die Kohlenhydratmasse, die Fettmasse und/oder die Ölmasse der Erntegutprobe. Die optische Messvorrichtung 19 ist dabei im Bereich einer Rückführungsöffnung 20 der Bypass-Vorrichtung 14 angeordnet, sodass der Erntegut-Teilstrom nach dem Passieren bzw. Durchströmen der optischen Messvorrichtung 19 zurück in den Kornelevator 12 einströmen kann.

Die Bypass-Vorrichtung 14 umfasst weiterhin eine kapazitive Messvorrichtung 21 zur Ermittlung von Ernteguteigenschaften des Erntegut-Teilstroms auf. Die kapazitive Messvorrichtung 21 ist dabei im und/oder am Sammelbehälter 17 angeordnet. Die kapazitive Messvorrichtung 21 und die optische Messvorrichtung 19 sind demnach derart in der Bypass-Vorrichtung 14 angeordnet, dass der Erntegut-Teilstrom beim Durchströmen der Bypass-Vorrichtung 14 zunächst die kapazitive Messvorrichtung 21 passiert und anschließend die optische Messvorrichtung 19 durchströmt. Die kapazitive Messvorrichtung 21 umfasst ein - in den FIGs. nicht dargestelltes - elektrisch leitendes Messschwert, welches sich in den Sammelbehälter 17 hinein erstreckt, somit mit dem Erntegut-Teilstrom im Sammelbehälter 17 in Kontakt kommt. Das Messschwert kann mehrere, insbesondere zwei, voneinander beabstandete Elektroden umfassen, welche vorzugsweise einen Kondensator ausbilden. Wesentlich für die kapazitive Messvorrichtung 21 ist, dass die kapazitive Messvorrichtung 21 nur dann die Ernteguteigenschaften des Erntegut-Teilstroms ermittelt, wenn eine Ermittlung von Ernteguteigenschaften des Erntegut-Teilstroms mittels der optischen Messvorrichtung 19 nicht möglich ist, da beispielsweise eine Erntegutsorte einer Eigenschaftsanalyse mittels der optischen Messvorrichtung 19 aufgrund ihrer Beschaffenheit nicht zugänglich ist.

Die Bypass-Vorrichtung 14, speziell der Sammelbehälter 17, kann weiterhin einen Füllstandsensor 22 umfassen zur Erfassung des Füllstandes des Erntegut-Teilstroms im Sammelbehälter 17 umfassen. Dieser Füllstandsensor 22 kann bezüglich der Schwerkraftrichtung SR auf der gleichen Position oder oberhalb der kapazitiven Messvorrichtung 21 der Bypass-Vorrichtung 14 ausgebildet sein.

Der Schneckenförderer 16 ist zur Förderung des dem Erntegutstrom 900 im Kornelevator 12 entnommenen Erntegut-Teilstroms durch die Bypass-Vorrichtung 14, insbesondere hin zur optischen Messvorrichtung 19 der Bypass-Vorrichtung 14, ausgebildet. Sofern die kapazitive Messvorrichtung 21 und optional der Füllstandsensor 22 vorhanden sind, ist der Schneckenförderer 16 somit zwischen der kapazitiven Messvorrichtung 21 bzw. dem Füllstandsensor 22 und der optischen Messvorrichtung 19 angeordnet.

Der Schneckenförderer 16 umfasst eine angetriebene Förderschnecke 23 und ein Gehäuse 24, das vorzugsweise als Rohrkörper ausgebildet ist. Die Förderschnecke 23 und das Gehäuse 24 begrenzen bzw. definieren gemeinsam den Schneckenförderer 16. In dem Gehäuse 24 ist die Förderschnecke 23 mittels ihrer Welle 25 drehbar gelagert. Die Förderschnecke 23 bzw. die Welle 25 der Förderschnecke 23 erstreckt sich entlang einer Förderrichtung FR, so dass die Längsachse L der Förderschnecke 23 bzw. die Längsachse der Welle 25 mit der Förderrichtung FR des Schneckenförderers 16 übereinstimmt. Die Welle 25 ist im Gehäuse 24 in zwei Gehäusewandungen drehbar gelagert, welche an gegenüberliegenden Enden des Schneckenförderers 16 ausgebildet sind bzw. die einander in Förderrichtung FR gegenüberliegen. Der Schneckenförderer 16 umfasst einen mittels einer - in den FIGs. nicht dargestellten - Steuereinrichtung des Mähdreschers 1 ansteuerbaren Elektromotor 26, welcher die Förderschnecke 23 bzw. die im Gehäuse 24 des Schneckenförderers 16 drehbar gelagerte Welle 25 der Förderschnecke 23 antreibt, wodurch der Erntegut-Teilstrom entlang der Förderrichtung FR des Schneckenförderers 16 gefördert wird.

Durch eine mittels des Elektromotors 26 induzierte Drehbewegung der Förderschnecke 23 wird der in den Schneckenförderer 16 über die Einströmöffnung 18 einströmende Erntegut-Teilstrom in Richtung einer Hauptförderrichtung HR transportiert, wodurch der Erntegut-Teilstrom bzw. eine Menge an Erntegut des Erntegut-Teilstroms der optischen Messvorrichtung 19 zugeführt wird. Hierzu steht die optische Messvorrichtung 19 mit dem Schneckenförderer 16 strömungstechnisch in Verbindung. Das Gehäuse 24 des Schneckenförderers 16 umfasst hierzu eine Zulauföffnung 27, die mit einem winklig an das Gehäuse 24 des Schneckenförderers 16 angeschlossenen Rohrkörper, auch als Zuführrohr 28 bezeichnet, fluchtet. Das Zuführrohr 28, welches über die Zulauföffnung 27 des Schneckenförderers 16 strömungstechnisch mit diesem verbunden ist, dient der Führung des Erntegut-Teilstroms bzw. einer Menge an Erntegut des Erntegut-Teilstroms von dem Schneckenförderer 16 zur optischen Messvorrichtung 19 und kann einteilig oder mehrteilig ausgebildet sein. Auch die optische Messvorrichtung 19 umfasst einen Rohrkörper, auch als Messrohr 29 bezeichnet, zur Führung des Erntegut-Teilstroms bzw. einer Menge an Erntegut des Erntegut-Teilstroms durch die optische Messvorrichtung 19, so dass die Ermittlung und/oder Messung der Ernteguteigenschaften des Erntegut-Teilstroms bzw. einer Menge an Erntegut des Erntegut-Teilstroms durchgeführt werden können. Das Messrohr 29 ist dabei aus einem Material ausgebildet, das ein Belichten des Erntegut-Teilstroms bzw. einer Menge an Erntegut des Erntegut-Teilstroms beim Durchströmen der optischen Messvorrichtung 19 ermöglicht, beispielsweise transparentes Glas, transparenter Kunststoff, transparentes Holz oder dergleichen. Das Messrohr 29 mündet in der Rückführungsöffnung 20 der Bypass-Vorrichtung 14, durch welche des Erntegut-Teilstroms bzw. einer Menge an Erntegut des Erntegut-Teilstroms nach dem Durchströmen der optischen Messvorrichtung 19 in den Kornelevator 12 und somit in den von dem Kornelevator 12 zum Korntank 13 geförderten Erntegutstrom 900 zurückströmen kann. Neben der Zulauföffnung 27 umfasst der Schneckenförderer 16 weiterhin eine Ausströmöffnung 30, die bezüglich der Hauptförderrichtung HR des Schneckenförderers 16 stromabwärts der Zulauföffnung 27 im Gehäuse 24 des Schneckenförderers 16 ausgebildet ist. Über die Ausströmöffnung 30 kann ein Teil des Erntegut-Teilstroms, welcher nicht über die Zulauföffnung 27 in die optische Messvorrichtung 19 eingeströmt, bereits aus dem Schneckenförderer 16 in den Kornelevator 12 und somit in den vom Kornelevator 12 zum Korntank 13 geförderten Erntegutstrom 900 zurückströmen, wodurch einem Erntegutstau im Schneckenförderer 16 entgegengewirkt wird. Die Einströmöffnung 18 und die Ausströmöffnung 30 sind somit an gegenüberliegenden Enden des Schneckenförderers 16 und die Zulauföffnung 27 ist zwischen der Einströmöffnung 18 und der Ausströmöffnung 30 ausgebildet.

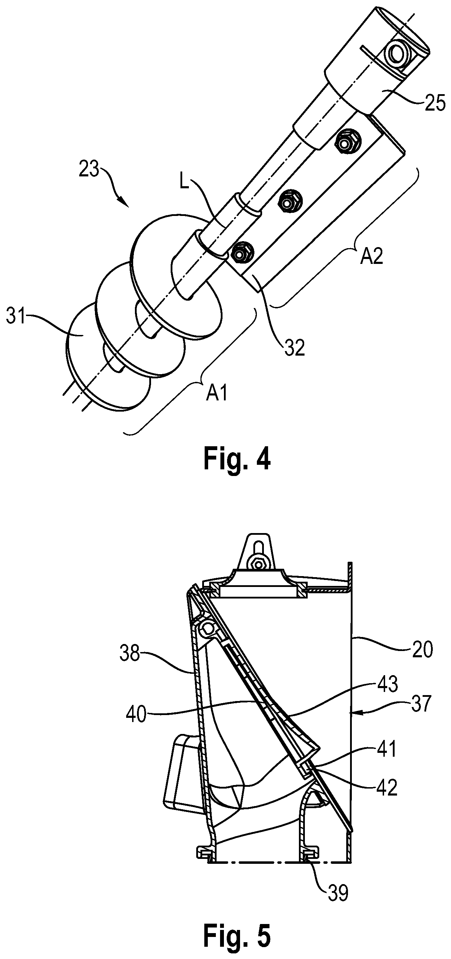

Zur Förderung des Erntegut-Teilstroms umfasst die Förderschnecke 23 eine Förderstruktur 31. Die Förderstruktur 31 erstreckt sich kontinuierlich, das heißt ohne Unterbrechung, entlang der Längsachse L der Förderschnecke 23 von der Einströmöffnung 18 hin zur Ausströmöffnung 30 des Schneckenförderers 16, wobei die Förderstruktur 31 abschnittsweise geometrisch unterschiedlich ausgebildet ist. Die Förderstruktur 31 ist demnach auf der Umfangsfläche der Welle 25 der Förderschnecke 23 ausgebildet. Konkret umfasst die Förderstruktur 31 einen ersten Abschnitt A1 und einen an den ersten Abschnitt A1 unmittelbar angrenzenden zweiten Abschnitt A2. Die Förderstruktur 31 ist, wie insbesondere in FIG. 4 dargestellt, im ersten Abschnitt A1 als Wendel bzw. wendelförmig und in dem zweiten Abschnitt A2 als ein Flügel bzw. flügelförmig ausgebildet, sodass je nach Ansteuerung des Elektromotors 26 bzw. Antrieb durch den Elektromotor 26 eine Förderfunktion in oder entgegen der Hauptförderrichtung HR und/oder eine Räumfunktion für einen Erntegutstau bzw. eine Erntegutverstopfung mittels der Förderstruktur 31 im Schneckenförderer 16 realisiert werden kann. Der wendelförmigen Förderstruktur 31 im ersten Abschnitt A1 kommt dabei ein höherer Beitrag zur Förderfunktion zu, der flügelförmigen Förderstruktur 31 im zweiten Abschnitt A2 hingegen ein höherer Beitrag zur Räumfunktion. Die als ein Flügel ausgebildete Förderstruktur 31 im zweiten Abschnitt A2 kann hierzu entlang der Längsachse L der Förderschnecke 23 in Radialrichtung R der Förderschnecke 23 außen eine Abstreiflippe 32 umfassen. Diese Abstreiflippe 32 ist bevorzugt aus einem gummielastischen Kunststoff gebildet, sodass die Abstreiflippe 32 elastische Eigenschaften aufweist. Die Erstreckung der beiden Abschnitte A1, A2 der Förderstruktur 31 entlang der Längsachse L der Förderschnecke 23 ist derart ausgebildet, dass der erste Abschnitt A1 die Einströmöffnung 18 und der zweite Abschnitt A2 die Zulauföffnung 27 überdeckt. Unter Überdeckung ist hierbei zu verstehen, dass die beiden Abschnitte A1, A2 entlang der Längsachse L nicht nur zwischen den beiden Öffnungen 18, 27 des Schneckenförderers 16 an der Förderschnecke 23 ausgebildet sind, sondern sich jeweils bis in den Bereich der entsprechenden Öffnungen 18, 27 erstrecken. Die Überdeckung mit den entsprechenden Öffnungen 18, 27 des Schneckenförderers 16 kann dabei lediglich bereichsweise erfolgen, vorzugsweise ist sie allerdings vollständig. Durch die Überdeckung von Wendel und Einströmöffnung 18 wird erzielt, dass der Erntegut-Teilstrom über die Einströmöffnung 18 direkt gravitationsbedingt in die Wendel einströmt und in Hauptförderrichtung HR im Schneckenförderer 16 zur Zulauföffnung 27 bzw. Ausströmöffnung 30 gefördert wird. Ein Erntegutstau bzw. eine Erntegutverstopfung im Schneckenförderer 16 bildet sich vorrangig bei gewissen Erntegutsorten und/oder Erntebedingungen im Bereich der Zulauföffnung 27, da nur eine gewisse Menge an Erntegut des Erntegut-Teilstroms über die Zulauföffnung 27 in das Zuführrohr 28 bzw. Messrohr 29 in die optische Messvorrichtung 19 einströmen kann. Durch die Überdeckung von Flügel und Zulauföffnung 27 wird erzielt, dass sich ein solcher Erntegutstau bzw. Erntegutverstopfung im Bereich der Zulauföffnung 27 durch die Räumfunktion entweder überhaupt nicht ausbildet oder entfernt werden kann.

Wie bereits beschrieben umfasst der Schneckenförderer 16 einen ansteuerbaren Elektromotor 26, welcher die Förderschnecke 23 antreibt, wodurch der Erntegut-Teilstrom entlang der Förderrichtung FR wahlweise in oder entgegen der Hauptförderrichtung HR des Schneckenförderers 16 gefördert wird. Mittels des Elektromotors 26 ist dabei die Drehzahl, mit der die Förderschnecke 23 im Betrieb des Schneckenförderers 16 angetrieben wird, einstellbar bzw. veränderbar. Die Einstellung bzw. Veränderung der Drehzahl kann dabei auf Grundlage verschiedener Informationen, Daten bzw. Sensorsignale erfolgen. So ist es möglich, dass die Drehzahl der Förderschnecke 23 mittels des Elektromotors 26 abhängig vom mittels des Füllstandsensors 22 erfassten Füllstand des Erntegut-Teilstroms im Sammelbehälter 17 eingestellt bzw. verändert wird. Mit anderen Worten, die Drehzahl der Förderschnecke 23 kann derart vom Elektromotor 26 angepasst werden, dass diese in Abhängigkeit des erfassten Füllstandes variiert. Genauso ist eine Einstellung bzw. Veränderung der Drehzahl der Förderschnecke 23 abhängig von einer Erntegutsorte im mittels des Kornelevators 12 zum Korntank 13 geförderten Erntegutstrom 900 bzw. des dem Erntegutstrom 900 entnommenen Erntegut-Teilstroms in der Bypass-Vorrichtung 14 vorstellbar. Die Erntegutsorte kann dabei manuell vorgegeben und an die Steuereinrichtung des Mähdreschers 1 zwecks Ansteuerung des Elektromotors 26 übermittelt oder aber genauso gut sensorisch im Mähdrescher 1 erfasst und an die Steuereinrichtung des Mähdreschers 1 zwecks Ansteuerung des Elektromotors 26 übermittelt werden. Weiterhin kann mittels des Elektromotors 26 ein zuvor beschriebener Erntegutstau bzw. eine Erntegutverstopfung im Schneckenförderer 16 ermittelt werden. Die Ermittlung kann beispielsweise über die Erfassung eines zum Antrieb der Förderschnecke 23 mit einer spezifischen Drehzahl erforderlichen seitens des Elektromotors 26 aufzubringenden Drehmomentes erfolgen. Steigt beispielsweise das vom Elektromotor 26 zur Aufrechterhaltung der Drehzahl der Förderschnecke 23 aufzubringende Drehmoment an, kann davon ausgegangen werden, dass ein Erntegutstau bzw. eine Erntegutverstopfung im Schneckenförderer 16 vorliegt. Der Elektromotor 26 kann dann unmittelbar den Antrieb der Förderschnecke 23 stoppen und/oder die Drehrichtung der Förderschnecke 23 zwecks Beseitigung des Erntegutstaus bzw. der Erntegutverstopfung über die Räumfunktion mittels des Flügels der Förderstruktur 31 im zweiten Abschnitt A2 bedarfsweise verändern. Zur Beseitigung des Erntegutstaus bzw. der Erntegutverstopfung kann insbesondere vorgesehen sein, dass der Elektromotor 26 die Förderschnecke 23 im Schneckenförderer 16 gemäß eines definierten Bewegungsmusters antreibt. Hierfür ist es von Vorteil, wenn der Elektromotor 26 mit einem - in den FIGs. nicht dargestellten - Drehwinkelsensor ausgestattet ist. Ein Bewegungsmuster zur Beseitigung eines Erntegutstaus bzw. der Erntegutverstopfung zeichnet sich vorzugsweise durch eine bedarfsweise wiederholbare aufeinanderfolgende Rotation der Förderschnecke 23 durch den Elektromotor 26 um einen definierten Drehwinkel, vorzugsweise einen Drehwinkel von weniger als 90°, in beide Drehrichtungen aus. Sofern ein Drehwinkelsensor am Elektromotor 26 vorhanden ist, ist es möglich, den Elektromotor 26 derart anzusteuern, dass die Förderschnecke 23 in einer bestimmten, festlegbaren bzw. festgelegten Ausrichtung, Position bzw. Winkelstellung gestoppt wird, wodurch eine nachfolgend noch näher beschriebene Reinigung und/oder Referenzierung der optischen Messvorrichtung 19 möglich wird.

Die Bypass-Vorrichtung 14 umfasst eine verfahrbare Reinigungseinrichtung 33 zur Reinigung und/oder Referenzierung der Bypass-Vorrichtung 14, insbesondere zur Reinigung und/oder Referenzierung der optischen Messvorrichtung 19, und weiterhin auch zur Sicherstellung eines Leerzustandes der für den Zulauf des Erntegut-Teilstroms bzw. einer Menge an Erntegut des Erntegut-Teilstrom in die optische Messvorrichtung 19 vorgesehenen Rohrkörper der Bypass-Vorrichtung 14, also des Zulaufrohres 28 und des Messrohres 29. Die Reinigungseinrichtung 33 ist zur Durchführung eines Reinigungsvorgangs entlang einer linearen Bahnkurve verfahrbar, wobei die lineare Bahnkurve durch den Schneckenförderer 16 über die Zulauföffnung 27 in das Zulaufrohr 28 und das Messrohr 29 verläuft, wodurch die Reinigungseinrichtung 33 bis in die optische Messvorrichtung 19 verfahrbar ist. Die Reinigungseinrichtung 33 wird mittels eines Elektromotors 34 entlang ihrer linearen Bahnkurve verfahren.

Die Förderschnecke 19 des Schneckenförderers 16 ist über die Förderstruktur 31, die Ansteuerung des Elektromotors 26 und optional einen Wellenabschnitt W mit verringertem Durchmesser im Bereich der Zulauföffnung 27 des Schneckenförderers 16 derart strukturell und funktional ausgebildet bzw. ausgestaltet, dass der Reinigungsvorgang mittels der Reinigungseinrichtung 33 durchführbar ist bzw. durchgeführt werden kann. Konkret wird für einen Reinigungsvorgang die Förderschnecke 23 zunächst mittels des Elektromotors 26 in einer solchen Ausrichtung, Position bzw. Winkelstellung gestoppt, dass die als ein Flügel ausgebildete Förderstruktur 31 im zweiten Abschnitt A2 die Zulauföffnung 27 des Schneckenförderers 16 nicht verschließt oder blockiert. Die Reinigungseinrichtung 33 wird dann mittels des Elektromotors 34 entlang ihrer linearen Bahnkurve durch den Schneckenförderer 16 in die Zulauföffnung 27 bzw. die sich an die Zulauföffnung 27 anschließenden Rohrkörper 28, 29 verfahren, wobei die Reinigungseinrichtung 33 die Förderschnecke 23 beim Verfahren entlang ihrer linearen Bahnkurve im Wellenabschnitt W durch den verringerten Durchmesser der Welle 25 passieren kann.

Wie in FIG. 3 schematisch und exemplarisch dargestellt, umfasst die Reinigungseinrichtung 33 eine Kolbenstange 35, die für den Reinigungsvorgang entlang der linearen Bahnkurve verfahren werden kann. An der Kolbenstange 35 ist ein Reinigungselement 36 ausgebildet bzw. angeordnet, vorzugsweise in einem Endbereich der Kolbenstange 35. Das Reinigungselement 36 ist als Kombination von mehreren voneinander entlang der Kolbenstange 35 beabstandeten Abziehlippen, vorzugsweise wie dargestellt vier solcher Abziehlippen, und einer Bürste ausgebildet, die von den mehreren Abziehlippen entlang der Kolbenstange 35 beabstandet und in dem Endbereich der Kolbenstange 35 angeordnet ist. Wie bereits beschrieben, wird die Kolbenstange 35 mittels des Elektromotors 34 angetrieben, wodurch die Kolbenstange 35 an jeder Position entlang der linearen Bahnkurve während eines Reinigungsvorgangs oder Referenzierungsvorgangs der optischen Messvorrichtung 19 gestoppt werden kann. In FIG. 3 ist die Reinigungseinrichtung 33 bzw. die Kolbenstange 35 mit Reinigungselement 36 beispielhaft gleichzeitig in einer Ausgangsposition und einer Endposition dargestellt.

Um einen Reinigungsvorgang mittels der Reinigungseinrichtung 33 durchzuführen, ermittelt die optische Messvorrichtung 19 zunächst, ob eine Reinigung erforderlich ist. Die optische Messvorrichtung 19 übermittelt dem Mähdrescher 1, insbesondere der Steuereinrichtung des Mähdreschers 1, datentechnisch ein Reinigungs-Signal, wenn eine Reinigung der optischen Messvorrichtung 19 erforderlich ist. Ergänzend oder alternativ hierzu kann ein Reinigungsvorgang auch nach Ablauf eines durch einen Bediener des Mähdreschers 1 oder werksseitig festlegbaren Zeitintervalls und/oder während der Mähdrescher 1 einen spezifischen Prozessschritt während eines Erntevorgangs durchführt, beispielsweise im Vorgewende fährt, initiiert werden. Nach der Erfassung des Reinigungs-Signals führt der Mähdrescher 1, insbesondere die Steuereinrichtung des Mähdreschers 1, mittels der Reinigungseinrichtung 33 dann eine Reinigung der optischen Messvorrichtung 19 aus, wobei mittels der Reinigungseinrichtung 33 ein Einströmen von Erntegut aus dem Schneckenförderer 16 in die optische Messvorrichtung 19 unterbunden wird. Das Auslösen des Reinigungsvorgangs kann dabei wahlweise automatisch basierend auf dem Reinigungs-Signal erfolgen oder nach einer bedienerseitigen Freigabe erfolgen.

Wenn die optische Messvorrichtung 19 ein Reinigungs-Signal übermittelt, wird die die Kolbenstange 35 aus ihrer gegenwärtigen Position in die Endposition bewegt, um eine Reinigung der optischen Messvorrichtung 19, insbesondere des Messrohrs 29, zu bewirken.

Neben einer Reinigungsfunktion kann die Reinigungseinrichtung wie bereits angedeutet ferner auch für eine Referenzierung der optischen Messvorrichtung 19 genutzt werden. Bei einem Referenzierungsvorgang ermittelt die optische Messvorrichtung 19 zunächst, ob eine Referenzierung erforderlich ist. Ergänzend oder alternativ hierzu kann auch der Referenzierungsvorgang nach Ablauf eines durch einen Bediener des Mähdreschers 1 oder werksseitig festlegbaren Zeitintervalls und/oder während der Mähdrescher 1 einen spezifischen Prozessschritt während eines Erntevorgangs durchführt, beispielsweise im Vorgewende fährt, initiiert werden. Die optische Messvorrichtung 19 übermittelt dem Mähdrescher 1, insbesondere der Steuereinrichtung des Mähdreschers 1, datentechnisch ein Referenzierungs-Signal, wenn eine Referenzierung der optischen Messvorrichtung 19 erforderlich ist. Nach der Erfassung des Referenzierungs-Signals ermöglicht der Mähdrescher 1, insbesondere die Steuereinrichtung des Mähdreschers 1, mittels der Reinigungseinrichtung 33 dann eine Referenzierung der optischen Messvorrichtung 19, wobei auch beim Ausführen dieser Funktion mittels der Reinigungseinrichtung 33 ein Einströmen von Erntegut aus dem Schneckenförderer 16 in die optische Messvorrichtung 19 unterbunden wird. Auch das Auslösen des Referenzierungsvorgangs kann dabei wahlweise automatisch basierend auf dem Referenzierungs-Signal erfolgen oder nach einer bedienerseitigen Freigabe erfolgen.

Wenn die optische Messvorrichtung 19 ein Referenzierungs-Signal übermittelt, wird die Kolbenstange 35 derart angesteuert, dass sich die Kolbenstange 35 in einer - in den FIGs. nicht dargestellten - Zwischenposition positioniert, so dass die Erntegutprobe aus dem Schneckenförderer 16 nicht über die Zulauföffnung 27 in die Rohrkörper 27, 28 und somit nicht in die optische Messvorrichtung 19 einströmen kann.

Wenn die optische Messvorrichtung 19 kein Reinigungs-Signal und auch kein Referenzierungs-Signal übermittelt, wird die Kolbenstange 35 derart angesteuert, dass sich die Kolbenstange 35 in der Ausgangsposition positioniert, so dass der vom Schneckenförderer 16 geförderte Erntegut-Teilstrom bzw. eine Menge an Erntegut des geförderten Erntegut-Teilstroms über die Zulauföffnung 27 des Schneckenförderers 16 in die optische Messvorrichtung 19 einströmen kann.

Die Bypass-Vorrichtung 14 umfasst weiterhin eine Aufnahmeeinrichtung 37, welche in FIG. 2 in einer schematischen und exemplarischen Ansicht sowie in den FIGs. 3 und 5 teilweise in einer schematischen und exemplarischen Schnittansicht dargestellt ist. Diese Aufnahmeeinrichtung 37 ist mit der optischen Messvorrichtung 19 strömungstechnisch verbunden, sodass eine zuvor mittels der optischen Messvorrichtung 19 erfasste Menge an Erntegut des Erntegut-Teilstroms von der Aufnahmeeinrichtung 37 nach Durchströmen der optischen Messvorrichtung 19 zwecks einer Laborauswertung aufgenommen werden kann. Die Aufnahmeeinrichtung 37 umfasst dabei eine Verschlussvorrichtung 38 und einen mit der Verschlussvorrichtung 38 verbundenen Auffangbehälter 39, der die erfasste Menge an Erntegut aufnimmt. Der Auffangbehälter 39 ist von der Bypass-Vorrichtung 14 lösbar. Der Auffangbehälter 39 kann beispielsweise über eine Schraubsicherung oder ein Sicherungsmittel lösbar mit der Verschlussvorrichtung 39 verbunden sein. Bevorzugt ist der Auffangbehälter allerdings zweiteilig ausgebildet, wobei der eine Teil des Auffangbehälters 39, vorzugsweise der Teil, welcher den Behälterboden umfasst, von dem anderen Teil des Auffangbehälters 39, vorzugsweise der Teil, welcher den Behälterkopf umfasst, über Sicherungsmittel lösbar verbunden ist.

Nicht in jedem Anwendungsfall ist eine nachträgliche Untersuchung einer mittels der optischen Messvorrichtung 19 erfassten Menge an Erntegut des Erntegut-Teilstroms gewünscht. Um wahlweise eine zuvor mittels der optischen Messvorrichtung 19 erfasste Menge an Erntegut im Auffangbehälter 39 aufzunehmen oder aber die Menge an Erntegut nach Erfassung in der optischen Messvorrichtung 19 wieder über die Rückführungsöffnung 20 der Bypass-Vorrichtung 14 zurück in den Kornelevator 12 einströmen zu lassen bzw. diese dem Kornelevator 12 rückzuführen, umfasst die Verschlussvorrichtung 38 ein Verschlusselement 40. Das Verschlusselement 40 ist hierzu zwischen einer - in FIG. 5 dargestellten - Schließstellung, in welcher die optische Messvorrichtung 19 und der Auffangbehälter 39 strömungstechnisch voneinander getrennt sind, und einer Offenstellung, in welcher die optische Messvorrichtung 19 und der Auffangbehälter 39 strömungstechnisch miteinander verbunden sind, verlagerbar. Das Verschlusselement 40 ist bevorzugt als Verschlussklappe ausgebildet, welche um eine - in den FIGs. nicht dargestellte - Rotationsachse schwenkbeweglich zwischen der Schließstellung und Offenstellung in der Verschlussvorrichtung 38 gelagert ist. Die Verschlussvorrichtung 38 ist zwecks Rückführung der zuvor mittels der optischen Messvorrichtung 19 erfassten Menge an Erntegut nicht nur strömungstechnisch mit der die Rückführungsöffnung 20 verbunden, sondern umfasst die Rückführungsöffnung 20 bevorzugt. Das Verschlusselement 40 ist ferner derart in der Verschlussvorrichtung 38 angeordnet, dass der Erntegut-Teilstrom bzw. die mittels der optischen Messvorrichtung 19 erfasste Menge an Erntegut des Erntegut-Teilstroms in der Offenstellung des Verschlusselements 40 ausschließlich in den Auffangbehälter 39 und in der Schließstellung des Verschlusselements 40 über Kontakt mit dem Verschlusselement 40 ausschließlich durch die Rückführungsöffnung 20 in den Kornelevator 12 einströmt. Durch Verlagerung des Verschlusselements 40 zwischen der Offenstellung und der Schließstellung bzw. umgekehrt kann somit zwischen einem Auffangen einer mittels der optischen Messvorrichtung 19 erfassten Menge an Erntegut im Auffangbehälter 39 oder einer Rückführung dieser Menge über die Rückführungsöffnung 20 in den Kornelevator 12 bzw. den vom Kornelevator 12 in den Korntank 13 geförderten Erntegutstrom 900 gewählt werden.

Die Verschlussvorrichtung 38 umfasst eine Anlagestruktur 41, an welcher das Verschlusselement 40 in der Schließstellung anliegt. Das Verschlusselement 40 umfasst ein Dichtelement 42 zur dichtenden Anlage des Verschlusselements 40 an der Anlagestruktur41 in der Schließstellung des Verschlusselements 40. Die Anlagestruktur 41 und das Dichtelement 42 sind vorzugsweise jeweils derart an ihrer jeweiligen Komponente, also Verschlussvorrichtung 38 bzw. Verschlusselement 40, ausgebildet, dass die Öffnung in der Verschlussvorrichtung zur Zuführung einer zuvor mittels der optischen Messvorrichtung 19 erfassten Menge an Erntegut, die in der Schließstellung des Verschlusselements 40 von dem Selbigen verschlossen wird, in der Schließstellung des Verschlusselements 40 umfänglich abgedichtet ist.

Da das Verlagern des Verschlusselements 40 auch bei strömendem Erntegut durch die optische Messvorrichtung 19 erfolgen kann, ist es von Vorteil, wenn eine mit dem Erntegut-Teilstrom bzw. der mittels der optischen Messvorrichtung 19 erfassten Menge an Erntegut des Erntegut-Teilstroms in Kontakt kommende Oberfläche 43 des Verschlusselements 40 derart konturiert ist, dass bei einem Verlagern des Verschlusselements 40 aus der Offenstellung in die Schließstellung ein Einklemmen von Erntegut, insbesondere einzelnen Erntegutkörnern, zwischen dem Verschlusselement 40 und der Anlagestruktur 41vermieden wird. Die mit dem Erntegut-Teilstrom bzw. der mittels der optischen Messvorrichtung 19 erfassten Menge an Erntegut des Erntegut-Teilstroms in Kontakt kommende Oberfläche 43 des Verschlusselements 40 ist zur Vermeidung eines solchen Einklemmens, wie insbesondere in FIG. 5 dargestellt, zumindest bereichsweise rampenförmig und gestuft ausgebildet. Die Erntegutkörner können somit während eines Schließvorgangs des Verschlusselements 40, je nachdem zu welchem Zeitpunkt während des Schließvorgangs, an der Rampe entlanggleiten und entweder in durch die Rückführungsöffnung 20 in den Kornelevator 12 oder über die Stufen noch ungehindert in den Auffangbehälter 39 strömen.

Zwecks Verstellung des Verschlusselements 40 umfasst die Verschlussvorrichtung 38 ein - in den FIGs. nicht dargestelltes - Vorspannelement, vorzugsweise ein Federelement, mittels welchem das Verschlusselement 40 in die Schließstellung vorgespannt ist. Weiterhin umfasst die Verschlussvorrichtung 38 einen, vorzugsweise mittels der Steuereinrichtung des Mähdreschers 1, ansteuerbaren Aktor 44, welcher mit dem Verschlusselement 40 zum Verlagern desselben zwischen der Schließstellung und der Offenstellung gekoppelt ist. Der ansteuerbare Aktor 44 ist bevorzugt als ein elektrisch ansteuerbarer Hubmagnet ausgebildet, welcher durch Bestromung in die jeweiligen Endlagen verfahrbar ist, wodurch die Verlagerung des Verschlusselements 40 reversibel zwischen der Schließstellung und der Offenstellung erfolgt. Eine Ansteuerung des Aktors 44 zum Verlagern des Verschlusselements 40 kann wahlweise automatisiert oder manuell erfolgen. Sofern eine manuelle Ansteuerung implementiert ist, erfolgt die Ansteuerung bevorzugt mittels Betätigung eines, beispielsweise in einer Kabine des Mähdreschers 1 vorgesehenen, Bedienelements durch einen Bediener des Mähdreschers 1. Bei einer automatisierten Ansteuerung des Aktors 44 kann die Ansteuerung zeitabhängig oder durchsatzabhängig beispielsweise durch Bereitstellung eines entsprechenden Steuersignals durch die Steuereinrichtung des Mähdreschers 1 erfolgen.

Die verschiedenen zuvor beschriebenen Einrichtungen und Komponenten der Bypass-Vorrichtung sind vorzugsweise durch entsprechende Sicherungsmittel leicht zu montieren und/oder demontieren. Insbesondere die kapazitive Messvorrichtung 21, die optische Messvorrichtung 19, der Auffangbehälter 39 und/oder der Schneckenförderer 16 verfügen über Sicherungsmittel in Gestalt von Schnellverschlusselemente, vorzugsweise in Gestalt von sogenannten Camlocks und/oder Splinten, zum Einbau und Ausbau.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Selbstfahrender Mähdrescher | 34 | Elektromotor |
| 2 | Arbeitsorgan | 35 | Kolbenstange |
| 3 | Vorsatzgerät | 36 | Reinigungselement |
| 4 | Schrägförderer | 37 | Aufnahmeeinrichtung |
| 5 | Dreschwerk | 38 | Verschlussvorrichtung |
| 6 | Vorbereitungsboden | 39 | Auffangbehälter |
| 7 | Abscheideeinrichtung | 40 | Verschlusselement |
| 8 | Rücklaufboden | 41 | Anlagestruktur |
| 9 | Siebeinrichtung | 42 | Dichtelement |
| 10 | Reinigungseinrichtung | 43 | Oberfläche |
| 11 | Überkehrschnecke | 44 | Aktor |
| 12 | Kornelevator | 100 | Erntegutstrom |
| 13 | Korntank | 200 | Erntegutstrom |
| 14 | Bypass-Vorrichtung | 300 | Erntegutstrom |
| 15 | Zuführungsöffnung | 400 | Erntegutstrom |
| 16 | Schneckenförderer | 500 | Erntegutstrom |
| 17 | Sammelbehälter | 600 | Erntegutstrom |
| 18 | Einströmöffnung | 700 | Erntegutstrom |
| 19 | Optische Messvorrichtung | 800 | Erntegutstrom |
| 20 | Rückführungsöffnung | 900 | Erntegutstrom |
| 21 | Kapazitive Messvorrichtung | | |
| 22 | Füllstandsensor | SR | Schwerkraftrichtung |
| 23 | Förderschnecke | FR | Förderrichtung |
| 24 | Gehäuse | HR | Hauptförderrichtung |
| 25 | Welle | R | Radialrichtung |
| 26 | Elektromotor | L | Längsachse |
| 27 | Zulauföffnung | A1 | Erster Abschnitt |
| 28 | Zuführrohr | A2 | Zweiter Abschnitt |
| 29 | Messrohr | W | Wellenabschnitt |
| 30 | Ausströmöffnung | | |
| 31 | Förderstruktur | | |
| 32 | Abstreiflippe | | |
| 33 | Reinigungseinrichtung | | |

## Patentansprüche

1. Selbstfahrender Mähdrescher (1) zur Aufnahme und Behandlung von Erntegut, wobei der Mähdrescher (1) einen Kornelevator (12) zur Förderung eines Erntegutstroms (900) von einer Reinigungseinrichtung (10) des Mähdreschers (1) zu einem Korntank (13) des Mähdreschers (1) umfasst, wobei der Mähdrescher (1) eine am Kornelevator (12) angeordnete Bypass-Vorrichtung (14) zur Entnahme eines Erntegut-Teilstroms aus dem von dem Kornelevator (12) geförderten Erntegutstrom (900) umfasst, wobei die Bypass-Vorrichtung (14) eine optische Messvorrichtung (19) zur Ermittlung von Ernteguteigenschaften, insbesondere von Inhaltsstoffen, des Erntegut-Teilstroms umfasst, **dadurch gekennzeichnet, dass** die Bypass-Vorrichtung (14) eine Aufnahmeeinrichtung (37) umfasst, welche mit der optischen Messvorrichtung (19) strömungstechnisch verbunden und dazu vorgesehen und eingerichtet ist, eine zuvor mittels der optischen Messvorrichtung (19) erfasste Menge an Erntegut des Erntegut-Teilstroms aufzunehmen.

2. Selbstfahrender Mähdrescher (1) nach Anspruch 1, **dadurch gekennzeichnet, dass** die Aufnahmeeinrichtung (37) eine Verschlussvorrichtung (38) und einen mit der Verschlussvorrichtung (38) verbundenen Auffangbehälter (39) umfasst.

3. Selbstfahrender Mähdrescher (1) nach Anspruch 2, **dadurch gekennzeichnet, dass** die Verschlussvorrichtung (38) ein Verschlusselement (40) umfasst, welches zwischen einer Schließstellung, in welcher die optische Messvorrichtung (19) und der Auffangbehälter (39) strömungstechnisch voneinander getrennt sind, und einer Offenstellung, in welcher die optische Messvorrichtung (19) und der Auffangbehälter (39) strömungstechnisch miteinander verbunden sind, verlagerbar ist.

4. Selbstfahrender Mähdrescher (1) nach einem der Ansprüche 1 bis 3, **dadurch gekennzeichnet, dass** die Bypass-Vorrichtung (14) eine Zuführungsöffnung (15) umfasst, durch welche der Erntegut-Teilstrom aus dem Kornelevator (12) in die Bypass-Vorrichtung (14) einströmen kann, wobei die Bypass-Vorrichtung (14) eine Rückführungsöffnung (20) umfasst, durch welche der Erntegut-Teilstrom nach dem Passieren bzw. Durchströmen der optischen Messvorrichtung (19) bzw. die mittels der optischen Messvorrichtung (19) erfasste Menge an Erntegut des Erntegut-Teilstroms in den Kornelevator (12) einströmen kann.

5. Selbstfahrender Mähdrescher (1) nach Anspruch 4, **dadurch gekennzeichnet, dass** die Verschlussvorrichtung (38) die Rückführungsöffnung (20) umfasst, wobei das Verschlusselement (40) derart in der Verschlussvorrichtung (38) angeordnet ist, dass der Erntegut-Teilstrom bzw. die mittels der optischen Messvorrichtung (19) erfasste Menge an Erntegut des Erntegut-Teilstroms in der Offenstellung des Verschlusselements (40) ausschließlich in den Auffangbehälter (39) und in der Schließstellung des Verschlusselements (40) über Kontakt mit dem Verschlusselement (40) ausschließlich durch die Rückführungsöffnung (20) in den Kornelevator (12) einströmt.

6. Selbstfahrender Mähdrescher (1) nach einem der Ansprüche 3 bis 5, **dadurch gekennzeichnet, dass** die Verschlussvorrichtung (38) eine Anlagestruktur (41) umfasst, an welcher das Verschlusselement (40) in der Schließstellung anliegt, wobei eine mit dem Erntegut-Teilstrom bzw. der mittels der optischen Messvorrichtung (19) erfassten Menge an Erntegut des Erntegut-Teilstroms in Kontakt kommende Oberfläche (43) des Verschlusselements (40) derart konturiert ist, dass bei einem Verlagern des Verschlusselements (40) aus der Offenstellung in die Schließstellung ein Einklemmen von Erntegut zwischen dem Verschlusselement (40) und der Anlagestruktur (41) vermieden wird.

7. Selbstfahrender Mähdrescher (1) nach Anspruch 6, **dadurch gekennzeichnet, dass** die Oberfläche (43) des Verschlusselements (40) zumindest bereichsweise rampenförmig und gestuft ausgebildet ist.

8. Selbstfahrender Mähdrescher (1) nach Anspruch 6 oder 7, **dadurch gekennzeichnet, dass** das Verschlusselement (40) ein Dichtelement (42) zur dichtenden Anlage des Verschlusselements (40) an der Anlagestruktur (41) in der Schließstellung des Verschlusselements (40) umfasst.

9. Selbstfahrender Mähdrescher (1) nach einem der Ansprüche 3 bis 8, **dadurch gekennzeichnet, dass** die Verschlussvorrichtung (38) ein Vorspannelement umfasst, mittels welchem das Verschlusselement (40) in die Schließstellung vorgespannt ist.

10. Selbstfahrender Mähdrescher (1) nach einem der Ansprüche 3 bis 9, **dadurch gekennzeichnet, dass** die Verschlussvorrichtung (38) einen ansteuerbaren Aktor (44) umfasst, welcher mit dem Verschlusselement (40) zum Verlagern des Verschlusselements (40) zwischen der Schließstellung und der Offenstellung gekoppelt ist.

11. Selbstfahrender Mähdrescher (1) nach Anspruch 10, **dadurch gekennzeichnet, dass** der ansteuerbare Aktor (44) ein elektrisch ansteuerbarer Hubmagnet ist.

12. Selbstfahrender Mähdrescher (1) nach Anspruch 10 oder 11, **dadurch gekennzeichnet, dass** eine Ansteuerung des Aktors (44) zum Verlagern des Verschlusselements (40) automatisiert oder manuell, vorzugsweise mittels Betätigung eines Bedienelements durch einen Bediener des Mähdreschers (1), erfolgt, wobei die Ansteuerung des Aktors (44) vorzugsweise zeitabhängig oder durchsatzabhängig erfolgt.

13. Selbstfahrender Mähdrescher (1) nach einem 3 bis 12, **dadurch gekennzeichnet, dass** das Verschlusselement (40) als Verschlussklappe ausgebildet ist, wobei die Verschlussklappe um eine Rotationsachse schwenkbeweglich in der Verschlussvorrichtung (38) gelagert ist.

14. Selbstfahrender Mähdrescher (1) nach einem der Ansprüche 2 bis 13, **dadurch gekennzeichnet, dass** der Auffangbehälter (39) von der Bypass-Vorrichtung (14) lösbar ist.

15. Selbstfahrender Mähdrescher (1) nach Anspruch 14, **dadurch gekennzeichnet, dass** der Auffangbehälter (39) zweiteilig ausgebildet ist, wobei die beiden Behälterteile mittels eines Sicherungsmittels lösbar miteinander verbunden sind.
